Europäisches Patentamt

**European Patent Office**

Office européen des brevets

(11) Publication number: **0 028 512**
**B1**

# EUROPEAN PATENT SPECIFICATION

(45) Date of publication of patent specification: **26.06.85**

(21) Application number: **80303871.0**

(22) Date of filing: **30.10.80**

(51) Int. Cl.⁴: **F 01 K 3/00,** F 24 J 3/00,
B 65 G 53/24

(54) Storage and recovery systems for electrically generated energy.

(30) Priority: **31.10.79 US 89824**

(43) Date of publication of application:
**13.05.81 Bulletin 81/19**

(45) Publication of the grant of the patent:
**26.06.85 Bulletin 85/26**

(84) Designated Contracting States:
**CH DE FR GB IT LI**

(56) References cited:
**DE-B-1 303 487**
**FR-A-2 295 537**
**US-A-2 933 885**

**Schluderberg & Thornton "Moving Bed Heat
Transfer for advanced Power Reaktor
Applications" (Paper for Presentation Miami
International Conference Alternative Energy
Sources, 1977)**

(73) Proprietor: **THE BABCOCK & WILCOX
COMPANY**
**1010 Common Street P.O. Box 60035**
**New Orleans Louisiana 70160 (US)**

(72) Inventor: **Schluderberg, Donald C.**
**2100 Woodcrest Drive**
**Lynchburg Virginia (US)**

(74) Representative: **Cotter, Ivan John et al**
**D. YOUNG & CO. 10 Staple Inn**
**London WC1V 7RD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to storage and recovery systems for electrically generated energy.

Unless an energy storage system is provided, electricity produced by an electric power generating plant must be consumed immediately or it is lost. The demand for electricity from such a plant is not constant, but varies throughout the day. Therefore, electric power generating plants are conventionally designed to operate over a range of production levels and, moreover, so as to be capable of producing enough electricity to satisfy peak demands.

Designing the plant to peak load capacity is inherently uneconomical in that plant construction costs are proportional to capacity. Ideally, the plant could be constructed at average load level capacity thereby avoiding the higher construction costs for peak capacity. In order to do this, peak demands must be met by some supplemental source. Presently available sources of supplemental energy or use during peak demand periods include diesel engines, additional fossil-fired steam turbine-generators, and stored energy.

Of the known energy storage systems for electric power generating plants, pumped hydro is the most feasible. In the pumped hydro system, surplus electricity generated during slack or off-peak demand periods is used to pump water to higher elevation, usually into a dammed lake, where it is retained. During high demand periods, the water is released to flow down through hydro turbines, thereby generating needed electricity. Unfortunately, pumped hydro energy storage is limited in application by a paucity of acceptable sites for building dams and is further limited by opposition from environment conscious groups opposing dam construction.

Another storage system concept applicable to steam cycle electric generating plants is the removal of thermal energy directly from the steam cycle during slack demand periods to be stored for later utilisation during high demand periods. One such system known in the prior art diverts steam from the steam cycle to heat oil; see, for example, GB—A—1 524 236. Hydrocarbons such as oil have heat storage properties superior to those of water. However, oil typically loses its integrity if heated beyond 343°C (650°F) and its use is thereby limited. Steam temperatures in modern fossil-fired plants can exceed 538°C (1000°F). It is desirable to heat the energy storage medium to the highest temperature possible to maximise heat recovery efficiency. The hot oil system is therefore inherently limited in that it cannot be used at the highest temperatures possible because of its loss of integrity. Moreover, no known liquid maintains its integrity at 538°C (1000°F) at moderate pressures. Solids, however, are superior heat storage mediums in that they maintain integrity at elevated temperatures and at low pressure. Also, more heat per unit volume can be stored in solids than in liquids because of the greater density of the solid, notwithstanding a possible lower specific heat capacity.

One known system utilizing a solid for energy storage diverts hot fluid through holes in a solid block during slack demand periods thereby charging the block, i.e. raising the temperature of the solid. During high demand periods, the block is used to heat cooler steam or water thereby discharging the block, i.e. returning the energy to the system. This system may be used at high temperatures. However, it has an inherent disadvantage. The temperature of the block during discharge thereof is not constant, but decreases. As the temperature of the block decreases, the efficiency of heat transfer likewise decreases, resulting in a declining energy yield.

Apart from prior art in the field of heat storage technology, prior art exists in the field of free-flowing solid granules or microspheres as a mechanism for heat storage and transfer for advanced energy source power reactors. A typical description of research in this field is provided in a paper entitled, 'Moving Bed Heat Transfer for Advanced Power Reactor Applications' published by Mr. D.C. Schluderberg and Mr. T.A. Thornton at the Miami International Conference on Alternative Energy Sources, held in Miami Beach, Florida, U.S.A. on 5th to 7th December, 1977. This paper reported the result of some tests conducted with gravity flow moving beds of free-flowing microspheres over spiral tubing in a small laboratory-scale apparatus. This paper also described a number of proposals for recirculating particles from a hot reservoir through a steam generator to a cold reservoir for subsequent recirculation by means of an Archimedes spiral lift tube arrangement to the heat source and back to the hot particle reservoir.

The above-mentioned paper by Schluderberg and Thornton discloses a storage and recovery system for storing excess over demand energy generated by a steam cycle electrical generating plant during slack electricity demand periods by heating a heat storage medium and for recovering the thermally stored energy to provide supplemental electricity during peak electricity demand periods, the system comprising:

moving bed heat exchanger means for exchanging heat between the system and the generating plant;

conduit means for establishing fluid communication between the steam cycle and the moving bed heat exchanger means;

valve means for selectively opening and closing the conduit means;

a heat storage medium in the form of a bed of refractory particles of suitable size for flowing through the moving bed heat exchanger means, the moving bed heat exchanger means being operative to effect indirect heat exchange between the refractory particles and the generating plant fluid flowing in use through the heat exchanger means;

storage means for storing the heat storage medium; and

transport means for transporting the heat storage means between the storage means and the moving bed heat exchanger means.

The concept of particulate material as a heat transport mechanism has also been the subject of intensive research. The following collection of patents, for instance, are illustrative of the work that has been accomplished in this field of technology. US Patent No. 2 672 671, granted 23rd March, 1954, discloses a method of manufacturing high purity mullite-alumina pebbles that are capable of enduring severe conditions of cyclic thermal and mechanical shock. US Patent No. 2 644 799, granted 7th July, 1953, discloses the broad concept of a gravity-flow mass of pebbles for discharging stored heat. The cooled pebbles, after heat discharge, are recirculated by means of a bucket or screw conveyor. US Patent No. 2 808 494, granted 1st October, 1957 and entitled 'Apparatus for Storing and Releasing Heat', discloses a gas or oil fired system for heating an immobilised mass of powder or spheres in an heat storage apparatus.

US Patent No. 2 856 506, granted 14th October, 1958 and entitled 'Method for Storing and Releasing Heat', is a divisional of US Patent No. 2 808 494 and largely duplicates the disclosure thereof.

US Patent No. 3 615 187, granted 26th October, 1971 and entitled 'Process for the Production of Spherical Alumina-Silica Containing Solid Particles which are Predominantly Mullite', is directed to the production of the solid particles rather than to application techniques.

US Patent No. 3 669 889, granted 13th June, 1972 and entitled 'Granular Ceramic Heat Carrier Intended for Manufacture Thereof', describes a granular ceramic heat carrier for use in conjunction with chemical processes. A method of manufacturing these granules is also described in this patent.

In spite of the intensive research that has been applied to this general area of technology and clear energy conservation benefits of a practical adaptation of these techniques notwithstanding, there is, nevertheless, a continued need to come forward with more efficient moving bed and heat exchanger combinations. Further in this respect, there is a requirement to adapt this technology to practical heating power plant generation cycles in order to make this technology immediately available to the power utility industry.

According to the present invention there is provided a storage and recovery system for storing excess over demand energy generated by a steam cycle electrical generating plant during slack electricity demand periods by heating a storage medium and for recovering the thermally stored energy to provide supplemental electricity during peak electricity demand periods, the system comprising:

moving bed heat exchanger means for exchanging heat between the system and the generating plant;

conduit means for establishing fluid communication between the steam cycle and the moving bed heat exchanger means;

valve means for selectively opening and closing the conduit means;

a heat storage medium in the form of a bed of refractory particles of suitable size for flowing through the moving bed heat exchanger means, the moving bed heat exchanger means being operative to effect indirect heat exchange between the refractory particles and the generating plant fluid flowing in use through the heat exchanger means;

storage means for storing the heat storage medium; and

transport means for transporting the heat storage means between the storage means and the moving bed heat exchanger means;

the system being characterised in that the valve means is operative selectively to admit fluid from different points in the steam cycle to the moving bed heat exchanger means, and in that the conduit means includes a first pipe means for establishing fluid communication between at least one steam portion of the steam cycle and the moving bed heat exchanger means for extracting steam from the steam cycle for imparting heat therefrom to the refractory particles, a second pipe means to establish fluid communication between the moving bed heat exchanger means and a feedwater portion of the steam cycle to return the fluid extracted from the steam cycle through the first pipe means, a third pipe means to establish fluid communication between a reheater of the steam cycle and the moving bed heat exchanger means for extracting reheated steam from the steam cycle for imparting heat therefrom to the refractory particles, and a fourth pipe means for establishing fluid communication between the moving bed heat exchanger means and the steam cycle at a point upstream of the reheater to return the steam extracted from the steam cycle through the third pipe means.

Energy storage systems embodying the invention and described hereinbelow are designed to supply peak demand energy for an electrical generating plant. The generating plant operates at a constant average load fuel consumption rate. During slack demand periods, when electricity is consumed at less than the average rate, the storage system is charged by the surplus energy generated. During peak demand periods, when electricity is consumed at higher than the average rate, the storage system is tapped to enable production of the needed additional electricity while the main energy source, e.g. fossil boiler or nuclear reactor, continues to operate at a constant rate. A bed of free-flowing refractory particles is used for heat transfer and heat storage and provides both a solid heat storage medium for use at high temperature and a constant temperature heat source during system discharge.

The above-mentioned problems can be satisfied to a large extent through the use of embodiments of the present invention described herein wherein an arrangement of one or more silos is provided for absorbing heat from a mass of microspheres or other suitable particulate material. The microspheres absorb heat by flowing under gravitational force over heat exchanger tube bundles. Heat is provided illustratively from low and high-pressure heat water and reheat steam in a conventional power plant.

In embodiments of the present invention described below, the plant steam turbine output is modulated while fuel consumption remains constant. In typical steam cycle electric generating plants, portions of the cycle steam are extracted at various points for heating feedwater flow from the condenser to the steam generator in order to increase cycle efficiency. During off-peak periods, the steam generator can remain at full power while the turbine output is lowered by increasing extraction steam flow at various points in the steam cycle, thus lowering the flow rate to the turbines. The flow extracted above the normal amount is used to heat the storage inventory of moving bed solid particles. The extraction steam flows through a moving bed heat exchanger while moving bed particles flow down therethrough by gravity. In this way, by permitting the particulate matter to absorb heat from different temperature steam supplies within the power plant, a much more efficient heat storage and transfer system is provided. This system, moreover, is readily adaptable to the reheat steam cycle that characterises many modern power generation plants. The hot moving bed solids are then stored in an insulated bin until needed. When peak demand power is required, the hot solids flow through a moving bed heat exchanger to heat feedwater flow directed therethrough, thereby allowing a reduction of extracted steam flow below normal. This reduction in extracted steam results in increased turbine output and increased electricity generation. In this manner, heat storage can be used to vary plant power output above or below an established base load while the power input from the plant heat source is held constant at a level corresponding to the base load electrical output. Systems embodying the present invention can be retro-fitted to existing power plants, as well as designed into new plants, and can be used with fossil-fuelled plants or nuclear plants.

The invention will now be further described, by way of illustrative and non-limiting example, with reference to the accompanying drawings, in which:

Figure 1 is a schematic diagram of a fossil-fired electric power generating plant steam cycle utilising an energy storage system embodying the present invention;

Figure 2 is a graph showing the temperature of moving bed refractory particles through a moving bed heat exchanger of the system of Figure 1 as a function of percent heat transferred;

Figure 3 is a partial cut away elevational view of a preferred form of moving bed heat transfer and storage equipment of a system embodying the present invention;

Figure 4 is a view like Figure 3 of a heat exchanger of Figure 3;

Figure 5 is a view taken along line V—V of Figure 4;

Figure 6 is a schematic diagram like Figure 1 showing an alternative embodiment of the invention;

Figure 7 is an elevational view of a two silo system embodying the present invention;

Figure 8 is a view like Figure 7 of a three silo system;

Figure 9 is a view like Figure 8 showing a one silo, one heat exchanger arrangement; and

Figure 10 is a view like Figure 1 of a nuclear power plant steam cycle.

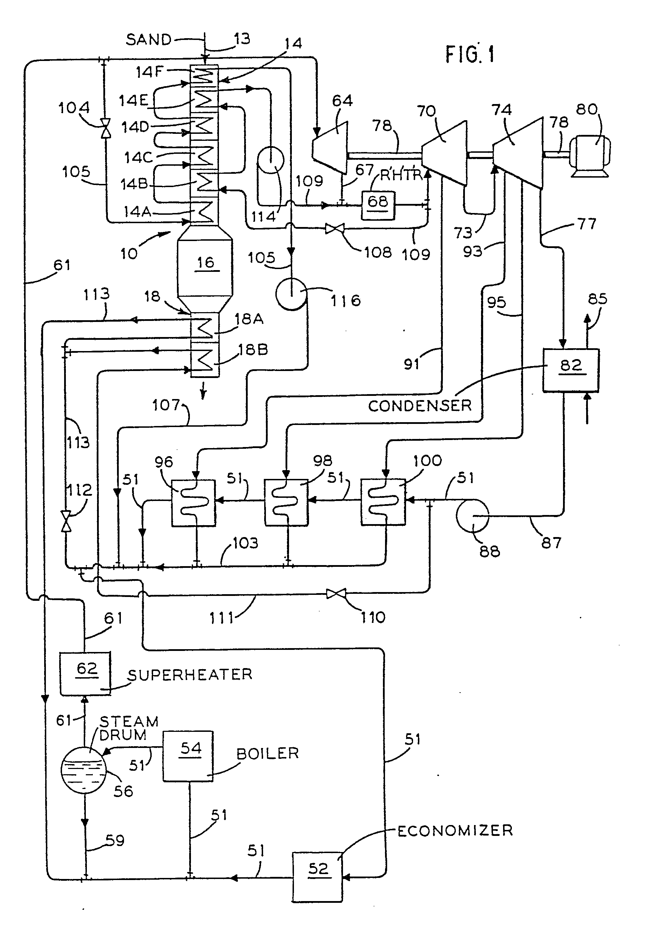

Figure 1 shows schematically a heat energy storage system embodying the invention incorporated into a fossil-fired electricity generating plant steam cycle. The steam cycle shown in Figure 1 is a simplified version showing only necessary component parts. Typically, such systems incorporate more intricate steam bleed and feedwater heating features and other efficiency related features not pertinent to the invention and therefore not shown in the figure.

The fossil-fired steam cycle of Figure 1 is isolated from the heat storage system by valves 104, 108, 110 and 112. In the steam cycle, system water, or steam as the case may be, is heated by hot combustion gases in four sections; an economizer 52, a boiler 54, a superheater 62, and a reheater 68. Subcooled water in a feedwater line 51 flows through the economizer 52, wherein the water is heated to near boiling temperature. The water then flows through the boiler 54 wherein it is raised to boiling temperature and converted to steam. The line 51 empties into a steam drum 56 wherein any unboiled water precipitates to the bottom thereof and flows through a line 59 and into the line 51 to be recirculated through the boiler 54. Steam flows from the steam drum 56 through the superheater 62 via a line 61. In the superheater 62, the temperature of the steam is raised above the boiling temperature, i.e. superheated.

The steam continues through the line 61 to expand through and turn a high pressure turbine 64. The steam leaves the turbine 64 via a line 67, is reheated in the reheater 68, and enters an intermediate pressure turbine 70. The steam expands through the intermediate pressure turbine 70 and leaves it via a line 73 to enter a low pressure turbine 74. The steam again expands in the lower pressure turbine 74 and leaves it via a line 77.

The turbines 64, 70 and 74 and an electrical generator 80 are mounted on a common shaft 78.

The steam then enters a condenser 82 in which it heats condensing fluid in a line 85 and condenses to water. The heat gained by the condensing fluid in the line 85 is eventually dissipated to the environment e.g. by discharging into a body of water or by evaporation into the air via a cooling tower (not shown).

The condensed water in a line 87 is then pumped up to feedwater pressure by a pump 88 and enters the feedwater line 51. Steam is extracted from the intermediate pressure turbine 70 via a line 91 and from the low pressure turbine 74 via lines 93 and 95 for heating feedwater in the line 51. Steam in the lines 91, 93 and 95 flows through feedwater heaters 96, 98 and 100, respectively, is condensed therein, collected in a line 103 and fed into the line 51. The purpose of feedwater heating is to increase cycle efficiency. The water in the line 51 now flows back to the economiser 52, completing the cycle.

The above-described portion of Figure 1 pertains to a fossil-fired steam cycle without energy storage capacity. The energy storage system embodying the invention and described below is added to the above-described cycle to increase peak generating capability.

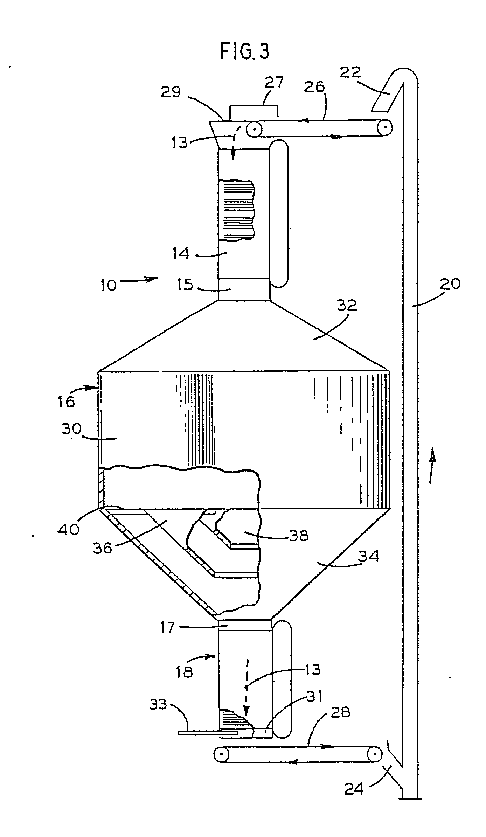

A primary component of the energy storage system, namely a silo 10, is shown schematically in the system diagram of Figure 1 and in more detail in Figure 3. Referring to Figure 1, the silo 10 includes a charging heat exchanger 14, a storage bin 16, and a discharging heat exchanger 18.

Free-flowing refractory particles are utilized as a heat storage medium. These particles are desirably spherical in shape, have a uniform size of about 100 microns, and are inexpensive. Acceptable materials include silica sand, barytes sand (barium sulphate), partially calcined clay, glass beads and reclaimed petroleum catalysts. In the embodiment of the invention described herein, silica sand is used as the heat storage medium.

During slack electrical demand periods, sand 13 is poured down through the exchanger 14 and is heated therein. Heated sand 13 falls from the heat exchanger 14 to the bin 16 to be retained therein.

The heat exchanger 14 is divided into sections 14A, 14B, 14C, 14D, 14E and 14F. During slack electricity demand periods, steam is diverted from the cycle and routed through the heat exchanger 14. The resulting decrease in the flow rate of the steam entering the turbines reduces the speed of the turbine shaft 78 and generator 80 and thereby reduces the electricity generated by the generator 80. With the valve 104 open, superheated steam is extracted from the line 61 and routed to the heat exchanger section 14A via a line 105. The line 105 leaves the section 14A and continues in turn through the sections 14C, 14D and 14F. The steam is reduced to saturation temperature in the sections 14A and 14C, condensed in the section 14D and cooled to feedwater temperature in the section 14F. Subcooled water in the line 105 is pumped back to the feedwater line 51, via a line 107, by a pump 116.

With the valve 108 open, additional steam is extracted from the line 67 downstream of the reheater 68 and routed via a line 109 through the heat exchanger sections 14B and 14E, being cooled therein to pre-reheat temperature and returned to the line 67 upstream of the reheater 68 by a pump 114.

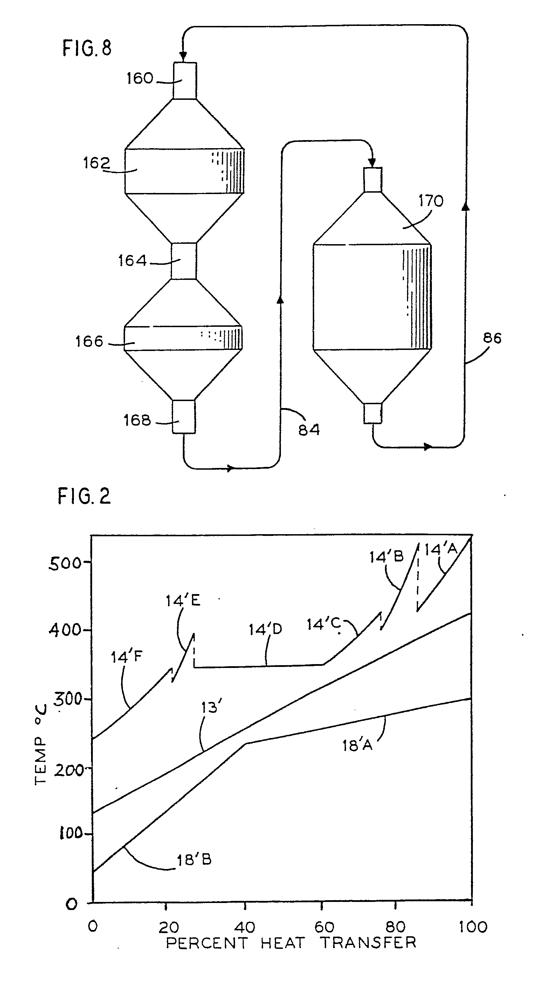

Figure 2 shows typical temperature curves for the heat exchangers 14 and 18 as a function of percent heat transferred to and from the sand 13 respectively. A curve 13' represents the temperature of the sand 13 as a function of the percent heat transferred. As the sand 13 enters the heat exchanger 14 at about 132°C (270°F), no heat has yet been transferred. As the sand 13 leaves the heat exchanger 14 at approximately 427°C (800°F), the sand 13 will gain no more heat. Therefore, the percent heat transferred equals 100 percent. The curve 13' would be a straight line function if the specific heat capacity of the sand 13 was constant. However, the heat capacity is not constant but rather a function of temperature and therefore the curve 13' is slightly curved.

Curves 14'A, 14'C, 14'D and 14'F represent the steam/water temperature in the line 105 of Figure 1 as it passes through the heat exchanger sections 14A, 14C, 14D and 14F, respectively. Curves 14'B and 14'E represent the steam temperature of the line 109 as it passes through the heat exchanger sections 14B and 14E respectively.

Referring back to Figure 1, during peak demand periods heated sand 13 is released from the bin 16 through the heat exchanger 18, in which it is cooled. The heat exchanger 18 is divided into two sections, 18A and 18B. Opening the valve 110 allows feedwater from the line 51 upstream of the feedwater heaters 96, 98 and 100 to enter the line 111 and pass through the section 18B, the feedwater being heated therein to downstream feedwater heater temperature. Opening the valve 112 allows feedwater downstream of the feedwater heaters 96, 98 and 100 to enter a line 113, being joined by a line 111 to pass through the section 18A and rejoin the main feedwater line 51 downstream of the economiser 52.

Referring now to Figure 2, curves 18'B and 18'A represent the water temperature in the lines 111 and 113 respectively through the heat exchangers 18B and 18A respectively. Figure 2 illustrates the judicious selection of points in the steam cycle from which steam is extracted, and the selective routing to heat exchanger sections to maintain adequate temperature differences between the steam and the sand 13 in the heat exchangers.

Further, extraction flow rates and sand flow rates are chosen such that steam or water, as the case may be, re-enters the steam cycle at the temperature of the steam-cycle fluid at the re-entry point.

With the charging heat exchanger 14 operating at the temperatures of Figure 2, the mass flow rate in the line 105 is about 22.7 kg/s (180,000 lb/h), the mass flow rate in the line 109 is about 18.9 kg/s (150,000 lb/h), and the mass flow rate of sand is about 214.2 kg/s (1,700,000 lb/h).

With the discharging heat exchanger 18 operating at the temperature of Figure 2, the mass flow rate of water is about 18.9 kg/s (150,000 lb/h) through the line 111 and about 84.4 kg/s (670,000

lb/h) through the line 113 with a sand mass flow rate of about 126.0 kg/s (1,000,000 lb/h).

With a charging mass flow rate of 214.2 kg/s (1,700,000 lb/h) and a discharging mass flow rate of 126.0 kg/s (1,000,000 lb/h), the period of discharge is obviously longer than the period of charge. The system may be designed to accommodate a particular power plant's peaking cycle. Baffles (not shown) of the heat exchangers 14 and 18 limit the flow rate of the sand 13.

During peak electricity demand periods, operation of the heat exchanger 18 as above described increases the enthalpy of feedwater entering the boiler 54 above normal enthalpy levels, resulting in the production of steam in the boiler at a faster rate and a lower fraction of water being returned to the boiler via the line 59. The increased steam flow rate turns the turbines faster and thereby increases generator electrical output to satisfy peak electricity demands.

Figure 3 shows a preferred form of the silo 10. The storage bin 16 of the silo 10 includes a hollow cylindrical barrel 30 topped by an inverted funnel-shaped upper cover 32 and enclosed at the bottom by a funnel-shaped lower cover 34. The upper cover 32 is open at the top. The heat exchanger 14 is positioned above the storage bin 16 and connected thereto via a duct or neck 15. Conical baffles 36 and 38 are disposed in the interior of the lower cover 34 and are open at the top and bottom. The baffles 36 and 38 are supported by a horizontal support grid 40. Any suitable support structure that will not obstruct the flow of sand may be used in the grid 40. The baffles 36 and 38 ensure that the sand empties into the heat exchanger 18 uniformly. In the absence of the baffles 36 and 38, the sand in the centre of the bin 16 would sink faster than the sand near the walls of the bin. The bin 116 communicates with the heat exchanger 18 via a connecting conduit 17.

A conveyor 28 is positioned to receive sand 13 flowing out of the heat exchanger 18 and to deposit the sand 13 into a receiver 24 of a bucket elevator 20. The bucket elevator 20 extends up above the top of the silo and empties through a spout 22 to a conveyor 26 positioned thereunder. The conveyor 26 extends from the spout 22 to above the heat exchanger 14. Diverters 27 divert sand from the conveyor 26 into a hopper 29.

The silo 10 operates in either a charging mode or a discharge mode. In operation of the charging mode, the bin 16 is initially filled with cold sand 13. To heat the sand 13, steam extracted from the steam cycle of an electric generating plant during a slack electric demand period is diverted through the heat exchanger 14. A discharge shutter or plate 33 is withdrawn, allowing sand to flow through a perforated or orifice plate 31, out of the silo 10 and onto the conveyor 28. The sand 13 is carried by the conveyor 28 and falls off into the receiver 24. The bucket elevator 20 lifts the sand 13 to the top thereof to be poured out of the spout 22 and deposited on the conveyor 26. Bucket elevators capable of operating under the desired conditions are commercially available. One such bucket elevator is available as model F-10 from Universal Industries, 1575 Big Rock Road West, Waterloo, Iowa 50701, U.S.A. The sand 13 is then conveyed over the heat exchanger 14 by the conveyor 26 and deposited therein. The diverter 27 is angled to divert the sand 13 from the conveyor 26 and into the hopper 29. The sand 13 flows down through the heat exchanger 14, is heated therein, and then travels through the neck 15 and into the bin 16.

A static, subtle bed of the refractory particles has a sufficiently low thermal conductivity that it is possible to store separate quantities of hot and cold bed material in the silo 16 without significant heat transfer between them. The silo 16 can therefor remain full while containing varying amounts of hot and cold material, depending on the point in time for the heat storage cycle. For this reason, the storage volume tends to be 50 percent less than for systems using heat transfer fluids stored in separate hot or cold tanks.

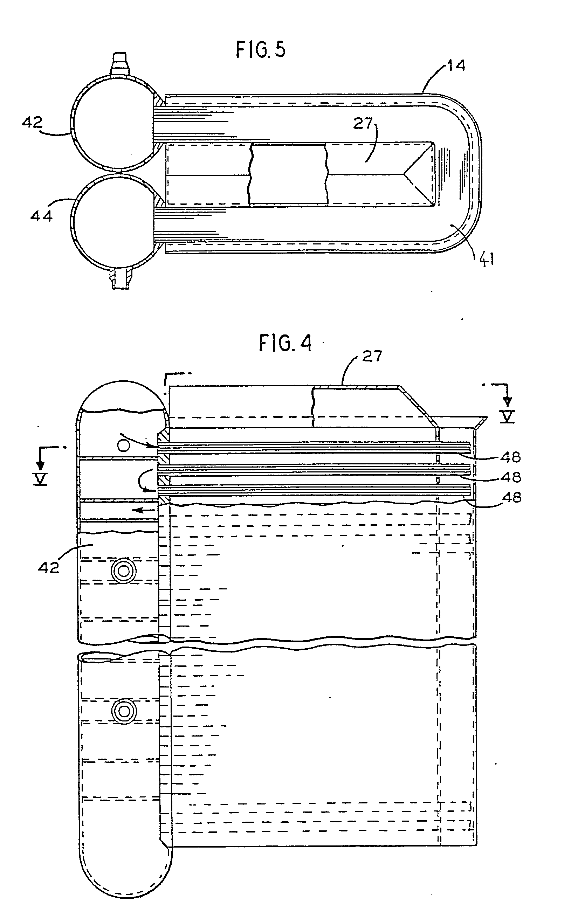

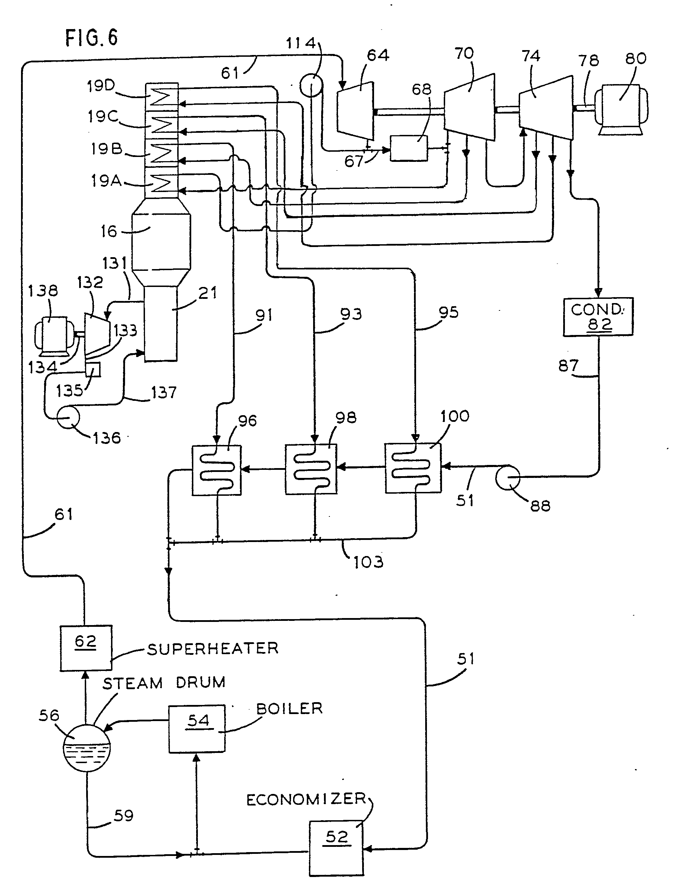

Figures 4 and 5 show a typical steam generator-like arrangement for the heat exchangers 14 and 18. An inlet header 42 establishes fluid communication with the tubes in a tube bank 41. The tubes in this bank are arranged in vertical segments, each of the ends of the segments being supported by perforated baffle plates 48. Working medium flowing within the tube bank 41 is discharged from the heat exchanger 14 by way of a communicating outlet header 44. The discharge shutter 31 and orifice plate 33 (Figure 3) are positioned immediately below the heat exchanger 18 to control the density of the bed of flowing particles 13 which are flowing over the tubes in the tube bank 41. The individual tubes in the tube bank 41 are arranged in a generally horizontal orientation in a staggered array that is designed to promote a high degree of flow mixing with the particles 13. In these conditions, heat transfer coefficients are expected to exceed those achieved in a fluidised bed (which bed would have the same particles in a surrounding gas) by a factor of 5 or more. Such results appear quite reasonable when it is remembered that particle concentrations and velocities on the heat transfer surface in a fluidized bed are much lower. Furthermore, contact with streams of the most dense mixtures is intermittent and somewhat uncontrollable at any given location. Turning once more to the illustrative heat exchanger 14 shown in Figures 4 and 5, for the purpose of this specific embodiment of the invention diaphragms are used in the vertical headers 42, 44 to produce a desired size tube side flow pass in each heating or cooling section, and also to separate heating sections operating at different steam pressures. The horizontal tube banks consist of 19.05 mm (0.75 in) outside diameter tubes on a 21.59 mm (0.85 in) triangular pitch with 17 tubes per row. The tube ends are swaged in 15.88 mm (0.625 in) outside diameter to provide adequate tube sheet ligament. Casing walls for the heat exchangers are horizontally corrugated in order to prevent the particles 13 from passing along the casing walls. Tube rows, moreover, are spaced by the use of 2.54 mm (0.10 in) thick rings (not shown) spaced at suitable intervals along each tube, extra vertical spacing between tubes at header diaphragm locations being fitted with the perforated baffle or orifice plates 48 to maintain an even particle flow velocity over the tube bank above and ensure a high bed density in contact with the entire tube periphery. The orifice plates 48 in turn rest upon support steel to carry the vertical load and tube weight in each bank.

Existing plants appear suitable for tolerating suitable increases in extraction steam flow and decrease in turbine throttle flow for the charge mode of the moving bed thermal storage cycle described above. However, a peaking steam generator and turbine generator are required, to provide the on-peak desired power, unless the plants turbine-generators have excess superheat capability beyond base load.

Figure 6 shows another embodiment of the present invention. Figure 6 illustrates the same steam cycle of Figure 1 except that a peaking steam cycle is provided because the existing turbine generators are not capable of stretched operation. Steam is generated in a discharge heat exchanger 21 and flows via a line 131 to a turbine 132 to expand therethrough. The cycle continues through a condenser 135 and a pump 136 and back to the heat exchanger 21 via a line 137 to complete the cycle. A peaking generator 138 is driven by the turbine 132 via a shaft 134.

Also shown in Figure 6 is the use of intermediate and low pressure turbine steam, directed from the intermediate and low pressure turbines 70, 74 by extraction pipes (not referenced), to heat charging heat exchanger sections 19B, 19C and 19D, before it is passed to the lines 91, 93 and 95, respectively, leading to the feedwater heaters 96, 98, 100. Reheat steam is utilised in a changing heat exchanger section 19A as described above for Figure 1.

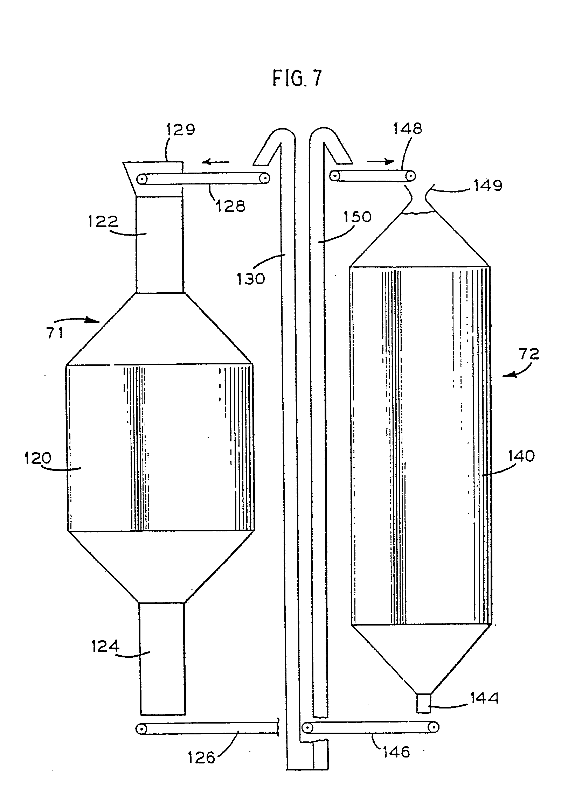

Figure 7 shows a two-silo system which avoids the need for internal distribution baffles and allows greater latitude in silo proportions, with the aim of achieving lower capital costs. It also provides greater adaptability to variations in system peak-load characteristics. Thus, as shown in Figure 7, two silos are provided, namely a hot silos 71 and a cold-surge silo 72. The hot silo 71 is continuously serviced by operating the fossil-fired heat source to supplement the daily off-peak available energy. This heat is applied to the particulate matter within the silo by way of a continuous charge heat exchanger 122. The heat exchanger 122 is mounted in a heat charging section of the silo 71, immediately below a conveyor belt 128 and a hopper 129. The hot silo 71 has, immediately below the continuous charge heat exchanger 122, a heat storage section 120, which in turn is immediately above a discharge heat exchanger 124, the discharge heat exchanger 124 thus extracting heat from the flowing particles and producing steam of a suitable quality. The now cool particles flow from the silo 71 onto a discharge conveyor 126 for transportation to a conventional first bucket elevator 150 which lifts them up and discharges them on to a conveyor 148 by means of which they are introduced into the top of the cold-surge silo 72 via a hopper 149. Particles discharged from a storage section 140 of the cold surge silo 72 via an outlet 144 are transported via a conveyor 146 and a second bucket elevator 130 to be discharged on to the conveyor 128 for recycling through the system in a manner similar to that described above with reference to Figure 3.

Particles stored in the cold-surge silo 72 vary plant output above or below an established base load, while the power input from the plant heat source is held constant at a level corresponding to the base load electrical requirements. The objective of these systems is to provide intermediate, on-peak load power at combined fuel and capital cost which is favourable when compared with competing methods such as oil-fired gas turbines, pumped hydro, combined cycles or additional system tie-in.

Pressurized water nuclear power reactor applications can utilise a triple silo arrangement to permit the combined use of off-peak nuclear heat together with continuous input from suitable coal-fired equipment.

The boiling water reactor could also use a triple silo arrangement, but would also require a reboil that would produce uncontaminated, that is, dry steam if off-peak nuclear heat for it to be stored. Liquid metal fast breeder reactors and high temperature gas cooled reactors have a variety of options, facilitated by higher operating temperatures and low fuel costs wherein a two or three silo arrangement would be used to meet varying amounts of intermediate on-peak load with or without additional fossil heat.

Further efficiencies in nuclear power systems can be maximised by supplementing the nuclear heat with fossil fuel produced heat to produce higher bed temperatures.

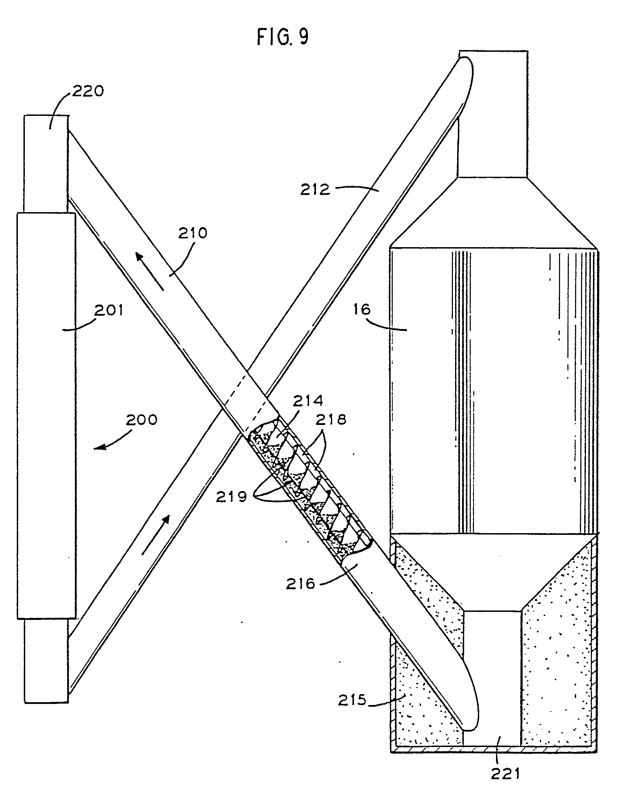

Figure 8, for example, shows a heat storage system operating on the basis of a 30 percent nuclear heat and 70 percent coal combination. Heat loss per day was assumed to be 7.5 percent. The silo system comprises a first silo 162 in which charging heat exchanger equipment 160 receives its heat from input off-peak nuclear energy. This silo stores particles at 263°C (505°F) and discharges these particles into a heat exchanger 164 which is serviced continuously by heat from a coal-fired steam source. These heated particles then flow through a second silo 166, when appropriate, to be discharged over a heat exchanger 168 in order to produce steam at appropriate conditions. The discharged particulate material is then conveyed in the direction shown by a line 84 to an inlet of a third silo 170 where the particles are stored at 135°C (275°F). Note in this respect that the particles were stored at a temperature of 552°C (1025°F) in the silo 166.

Discharged particles from the silo 170 then flow in the direction indicated by means of a line 86 back to the silo 162, first flowing over heat supplied by the off-peak nuclear energy in the heat exchanger 160 at the inlet to the silo 162. This silo system was designed to provide an electric power output of 18 MW for 11.5 hours which complies with a 200 MW electric plant base load output. Overall plant thermal efficiency was taken as 33 percent. In operation, during off-peak periods the entire inventory of the silo 170 flows through the nuclear steam heated section in the heat exchanger 160 to enter the silo 162.

However, during this time, there is a continuous flow of particles out of the silo 162 and into the silo 166. During the 14-hour discharge period, particles will flow from the silo 166 into the silo 170. In this way, a three-silo system stores off-peak reactor thermal energy and supplements it with continuously supplied energy from coal or some other fossil fuel. Thus, there is provided an improved system for storing heat during off-peak load conditions and utilizing this stored heat to supplement plant steam generating capacity at peak load conditions.

Figure 9 shows an alternative embodiment of the present invention. A single moving bed heat exchanger 200 is used in this embodiment to both heat and cool the sand. A pair of Archimedes lifts 210 and 212 transport the sand between the heat exchanger 200 and a single silo having a bin 16.

Fluid to be cooled or heated flows through a tube bank 201. Moving bed material flows down through the heat exchanger 200 around the tube bank 201 to be charged by extracted steam or to be discharged by heating feedwater flow in the manner described above. In this embodiment, adequate piping and valves (not shown) are provided to supply either extracted steam or feedwater to the steam cycle side of the moving bed heat exchanger 200 for either charging or discharging respectively.

In the embodiment of Figure 9, the bin 16 is supported by earth 215. This manner of support allows for a more economical bin structure and provides insulation for minimizing heat loss from the bin 16.

Archimedes lifts are well known in the art and comprise an inclined threaded screw 214 encased by a cylinder 216. As the screw 214 and casing 216 turn together, material laying on the bottom edge of the screw is transported upwardly along the screw threads.

In Figure 9, sand is transported by the Archimedes lifts 212 and 210 in this manner. To minimise the effort required to turn the lifts 210 and 212, the individual pockets of sand laying therein are fluidised, thus decreasing the friction between the sand and the lifts. Illustratively, this can be accomplished by maintaining a pressure differential between the ends 220 and 221 of the lift 210. The resulting air forced through the lift 210 bubbles through pockets of sand 219 to fluidize them. By sealing the ends 220 and 221, air 218 pumped by the lift 210 itself is forced back through the sand pockets 219 to fluidise them.

Alternatively, a blower (not shown) may be provided to pump air through the lift 210.

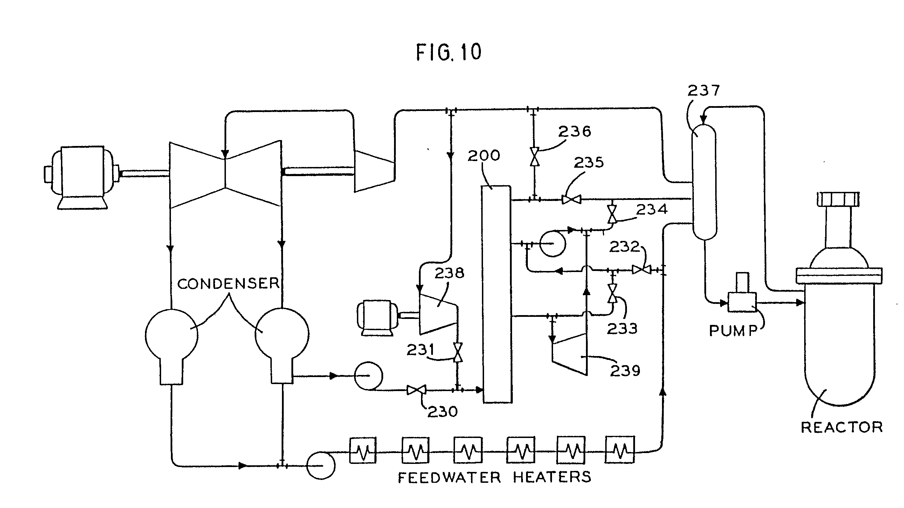

Figure 10 shows the single heat exchanger 200 utilized in a nuclear power plant steam cycle. In the charging mode, valves 230, 232, 233 and 35 are closed and valves 231, 234 and 236 are open. High pressure steam from a steam generator 237 enters the top of the heat exchanger 200, passes therethrough to heat the sand 13, and re-enters the steam generator 237.

Additional high pressure steam, which has been compressed by a compressor 238, enters the heat exchanger 200 from the bottom, leaves through a water turbine 239 and flows back to the steam generator 237.

In the discharging mode, the valves 231, 234 and 236 are closed and the valves 230, 232, 233 and 235 are open. Feedwater enters the heat exchanger 200 at the bottom, is joined by heated feedwater admitted through the valve 232, and leaves the heat exchanger to enter the steam generator at an elevated enthalpy level.

**Claims**

1. A storage and recovery system for storing excess over demand energy generated by a steam cycle electrical generating plant during slack electricity demand periods by heating a heat storage medium and for recovering the thermally stored energy to provide supplemental electricity during peak electricity demand periods, the system comprising:

moving bed heat exchanger means (e.g. 14; 19) for exchanging heat between the system and the generating plant;

conduit means for establishing fluid communication between the steam cycle and the moving bed heat exchanger means;

valve means for selectively opening and closing the conduit means;

a heat storage medium in the form of a bed of refractory particles (13) of suitable size for flowing through the moving bed heat exchanger means, the moving bed heat exchanger means being operative to effect indirect heat exchange between the refractory particles and the generating plant fluid flowing in use through the heat exchanger means;

storage means (e.g. 16) for storing the heat storage medium; and

transport means (e.g. 20) for transporting the heat storage means between the storage means and the moving bed heat exchanger means;

the system being characterised in that the valve means is operative selectively to admit fluid from different points in the steam cycle to the moving bed heat exchanger means, and in that the conduit means includes a first pipe means for establishing fluid communication between at least one steam portion of the steam cycle and the moving bed heat exchanger means (e.g. 14; 19) for extracting steam from the steam cycle for imparting heat therefrom to the refractory particles (13), a second pipe means (e.g. 107) to establish fluid communication between the moving bed heat exchanger means and a feedwater portion of the steam cycle to return the fluid extracted from the steam cycle through the first pipe means, a third pipe means (e.g. 109, lower section) to establish fluid communication between a reheater (68) of the steam cycle and the moving bed heat exchanger means for extracting reheated steam from the steam cycle for imparting heat therefrom to the refractory particles, and a fourth pipe means (e.g. 109, upper section) for establishing fluid communication between the moving bed heat exchanger means and the steam cycle at a point upstream of the reheater (68) to return the steam extracted from the steam cycle through the third pipe means.

2. A system according to claim 1, wherein (Figure 1) the first pipe means includes a pipe (105) to establish fluid communication between a superheated portion of the steam cycle and the moving bed heat exchanger means (14A, 14C, 14D, 14F) for extracting superheated steam from the steam cycle.

3. A system according to claim 1 or claim 2, wherein the conduit means includes a pipe (111) to establish fluid communication between a feedwater portion of the steam cycle, above feedwater heating means (96, 98, 100), and the heat exchanger means (18) to divert feedwater to be heated by the heat exchanger means, and two further pipes (113) to separately return fluid back to the steam cycle above an economiser (52) and below the economiser, respectively.

4. A system according to claim 1, wherein (Figure 6) the first pipe means includes a plurality of turbine steam extraction pipes to separately divert intermediate and low pressure turbine steam to the moving bed heat exchanger means (19B, 19C, 19D).

5. A system according to claim 1 or claim 4, comprising a recovery mode steam cycle for producing electricity during peak electricity demand periods, the recovery mode steam cycle including:
a recovery turbine-generator (132, 138),
a recovery condensor (135),
a recovery pump (136), and
recovery conduit means for directing fluid through the moving bed heat exchanger means (21), through the recovery turbine pump (132), through the recovery condenser (135), and through the recovery pump (136) and back to the moving bed heat exchanger means (21) to complete the cycle.

6. A system according to any one of claims 1 to 5, wherein:
the storage means includes a single insulated silo (10);
the moving bed heat exchanger means includes a charging heat exchanger (14) positioned at the top of the silo (10) and operative in use to heat the refractory particles (13) by means of steam diverted from the steam cycle, and a discharge heat exchanger (18) positioned at the bottom of the silo (10) and operative in use to heat feedwater by means of the refractory particles; and
the transport means includes a bucket elevator (20) for lifting the refractory particles (13) from below the discharge heat exchanger (18) to above the charging heat exchanger (14), lower conveyor means (28) for conveying refractory particles (13) flowing out of the discharge heat exchanger (18) to the bucket elevator (20), and upper conveyor means (26) for conveying the refractory particles (13) from the bucket elevator (20) to the charging heat exchanger (14) to flow down therethrough.

7. A system according to any one of claims 1 to 5, wherein:
the storage means includes a hot silo (71) and a cold silo (72);
the moving bed heat exchanger means includes a charging heat exchanger (122) positioned at the top of the hot silo (71) and operative in use to heat the refractory particles by means of steam directed from the steam cycle, and a discharge heat exchanger (124) positioned at the bottom of the hot silo (71) and operative in use to heat feedwater by means of the refractory particles; and
the transport means includes
a first bucket elevator (150) for lifting refractory particles from below the discharge heat exchanger (124) to above the cold silo (72),
a second bucket elevator (130) for lifting the refractory particles from below the cold silo (72) to above the charging heat exchanger (122),
first conveyor means (126) to convey refractory particles flowing out of the discharge heat exchanger (124) to the first bucket elevator (150),
second conveyor means (148) to convey the refractory particles from the first bucket elevator (150) to the cold silo (72),
third conveyor means (146) to convey refractory particles flowing from the cold silo (72) to the second bucket elevator (130), and
fourth conveyor means (128) to convey the refractory particles from the second bucket elevator (130) to the charging heat exchanger (122) to flow down therethrough.

8. A system according to any one of claims 1 to 5, wherein:
the storage means includes a single insulated silo having a bin (16);
the moving bed heat exchanger means includes a single moving bed heat exchanger (200) for both charging and discharging the bed of refractory particles; and
the transport means includes a first Archimedes lift (210) to move the refractory particles from below the bin (16) to above the moving bed heat exchanger (200) and a second Archimedes lift (212) to move the refractory particles from below the heat exchanger (200) to above the bin (16).

9. A system according to claim 8, wherein each of the Archimedes lifts (210, 212) includes a pressurizing means to maintain a pressure differential between the ends of the lift to promote the diffusion of air through the lift thereby fluidising the refractory particles being conveyed therein.

**Patentansprüche**

1. Speicher- und Wiedergewinnungsanlage zum Speichern über dem Bedarf liegender Überschußenergie, die durch einen elektrischen Stromerzeugungsbetrieb mit Dampfzyklus während Zeiten geringen elektrischen Bedarfs durch Erwärmen eines Wärmespeichermediums erzeugt ist, und zum Wiedergewinnen der thermisch gespeicherten Energie, um während Spitzenelektrizitätsbedarfszeiten Hilfselektrizität vorzusehen, wobei die Anlage aufweist:

Fließbettwärmeaustauschereinrichtungen (z.B. 14; 19) für den Austausch von Wärme zwischen der Anlage und dem Stromerzeugungsbetrieb;

Leitungseinrichtungen für die Schaffung einer Fluidverbindung zwischen dem Dampfzyklus und den Fließbettwärmeaustauschereinrichtungen;

Ventileinrichtungen für das wahlweise Öffnen und Schliessen der Leitungseinrichtungen;

ein Wärmespeichermedium in der Form eines Bettes feuerfester Teilchen (13) geeigneter Größe zum Durchfließen durch die Fließbettwärmetauschereinrichtungen, wobei die Fließbettwärmetauschereinrichtungen betrieblich einen indirekten Wärmeaustausch zwischen den feuerfesten Teilchen und dem Fluid der stromerzeugenden Anlage bewirken, welches bei der Benutzung durch die Wärmetauschereinrichtungen strömt;

Speichereinrichtungen (z.B. 16) zum Speichern des Wärmespeichermediums; und

Transporteinrichtungen (z.B. 20) für das Transportieren der Wärmespeichermittel zwischen den Speichermitteln und den Fließbettwärmetauschermitteln;

dadurch gekennzeichnet, daß die Ventileinrichtung wahlweise wirksam ist, um ein Fluid aus unterschiedlichen Stellen im Dampfzyklus zu den Fließbettwärmetauschermitteln zuzulassen, und daß die Leitungseinrichtung eine erste Rohreinrichtung aufweist zur Schaffung einer Fluidverbindung zwischen mindestens einem Dampfteil des Dampfzyklus und den Fließbettwärmetauschereinrichtungen (z.B. 14; 19) zum Extrahieren von Dampf aus dem Dampfzyklus, um Wärme von dort zu den feuerfesten Teilchen (13) zu bringen, eine zweite Rohreinrichtung (z.B. 107) aufweist, um eine Fluidverbindung zwischen der Fließbettwärmetauschereinrichtung und einem Speisewasserteil des Dampfzyklus zu schaffen, um das aus dem Dampfzyklus extrahierte Fluid durch die erste Rohreinrichtung zurückzuführen, eine dritte Rohreinrichtung (z.B. 109, unterer Abschnitt) aufweist, um eine Fluidverbindung zwischen einem Wiedererwärmer (68) des Dampfzyklus und der Fließbettwärmetauschereinrichtung zu schaffen zum Extrahieren von wiedererwärmtem Dampf aus dem Dampfzyklus, um von dort Wärme zu den feuerfesten Teilchen zu bringen, und eine vierte Rohreinrichtung (z.B. 109, oberer Abschnitt) aufweist, um eine Fluidverbindung zwischen der Fließbettwärmetauschereinrichtung und dem Dampfzyklus an einer Stelle aufstromig von dem Wiedererwärmer (68) zu schaffen und den aus dem Dampfzyklus extrahierten Dampf durch die dritte Rohreinrichtung zurückzuführen.

2. Anlage nach Anspruch 1, wobei (Figur 1) die erste Rohreinrichtung ein Rohr (105) aufweist, um eine Fluidverbindung zwischen einem überhitzten Teil des Dampfzyklus und der Fließbettwärmetauschereinrichtung (14A, 14C, 14D, 14F) zum Extrahieren überhitzten Dampfes aus dem Dampfzyklus zu schaffen.

3. Anlage nach Anspruch 1 oder Anspruch 2, wobei die Leitungseinrichtung ein Rohr (111) aufweist, um eine Fluidverbindung zwischen einem Speisewasserteil des Dampfzyklus über der Speisewasserheizeinrichtung (96, 98, 100) und der Wärmetauschereinrichtung (18) zu schaffen, um von der Wärmetauschereinrichtung zu erwärmendes Speisewasser umzuleiten, sowie zwei weitere Rohre (113), um getrennt Fluid zum Dampfzyklus über einen Abgasvorwärmer (52) bzw. unter dem Abgasvorwärmer zurückzuführen.

4. Anlage nach Anspruch 1, wobei (Figur 6) die erste Rohreinrichtung eine Mehrzahl von Turbinendampfextraktionsrohren aufweist, um getrennt Zwischendruck- und Niederdruckturbinendampf zu den Fließbettwärmetauschereinrichtungen (19B, 19C, 19D) umzuleiten.

5. Anlage nach Anspruch 1 oder Anspruch 4, mit einem Dampfzyklus mit Wiedergewinnungs-Betriebsart zur Erzeugung von Elektrizität während Spitzenelektrizitätsbedarfszeiten, wobei der Dampfzyklus mit Wiedergewinnungsbetriebsart aufweist:

einen Wiedergewinnungsturbinengenerator (132, 138),

einen Wiedergewinnungskondensor (135),

eine Wiedergewinnungspumpe (136) und

Wiedergewinnungsleitungseinrichtungen zum Führen des Fluids durch die Fließbettwärmetauschereinrichtungen (21), durch die Wiedergewinnungsturbinenpumpe (132), durch den Wiedergewinnungskondensor (135) und durch die Wiedergewinnungspumpe (136) und zurück zu den Fließbettwärmetauschereinrichtungen (21), um den Zyklus abzuschließen.

6. Anlage nach einem der Ansprüche 1 bis 5, wobei:

die Speichereinrichtung ein einziges isoliertes Silo (10) aufweist;

die Fließbettwärmetauschereinrichtung einen Ladewärmetauscher (14) aufweist, der oben am Silo (10) angeordnet ist und betrieblich so arbeitet, daß die feuerbeständigen Teilchen (13) mittels Dampf erwärmt werden, welcher aus dem Dampfzyklus abgeleitet wird, sowie einen Beladewärmetauscher (18) aufweist, der am Boden des Silos (10) angeordnet und so betrieben wird, daß Frischwasser mittels der feuerbeständigen Teilchen erwärmt wird; und

die Transporteinrichtung ein Schöpfwerk (20) aufweist zum Anheben der feuerfesten Teilchen (13) von unterhalb des Beladewärmetauschers (18) nach oben zum Ladewärmetauscher (14), untere Fördereinrichtungen (28) aufweist zum Fördern der aus dem Entladewärmetauscher (18) herausfließenden feuerfesten Teilchen (13) zum Schöpfwerk (20) und obere Fördereinrichtungen (26) aufweist für das Fördern der feuerfesten Teilchen (13) aus dem Schöpfwerk (20) zum Ladewärmetauscher (14), um dort nach unten hindurchzuströmen.

7. Anlage nach einem der Ansprüche 1 bis 5, wobei:

die Speichereinrichtung ein heißes Silo (71) und ein kaltes Silo (72) aufweist;

die Fließbettwärmetauschereinrichtung einen Ladewärmetauscher (122) aufweist, der oben am heißen Silo (71) angeordnet und im Betrieb so wirksam ist, daß er die feuerfesten Teilchen mittels Dampf, der aus dem Dampfzyklus geführt wird, erwärmt, und einen Entladewärmetauscher (124) aufweist, der am Boden des heißen Silos (71) angeordnet ist und im Betrieb so wirkt, daß Speisewasser mittels der feuerfesten Teilchen erwärmt wird; und

die Transporteinrichtung aufweist:

ein erstes Schöpfwerk (150) zum Anheben von feuerfesten Teilchen von unterhalb des Entladewärmetauschers (124) nach oberhalb des kalten Silos (72),

ein zweites Schöpfwerk (130) zum Anheben der feuerfesten Teilchen von unterhalb des kalten Silos (72) nach oberhalb des Ladewärmetauschers (122),

erste Fördermittel (126) zum Fördern feuerfester Teilchen, die aus dem Entladewärmetauscher (124) herausfließen zu dem ersten Schöpfwerk (150),

zweite Fördermittel (148) zum Fördern von feuerfesten Teilchen aus dem ersten Schöpfwerk (150) zu dem kalten Silo (72),

dritte Fördermittel (146) zum Fördern feuerfester Teilchen, die aus dem kalten Silo (72) zum zweiten Schöpfwerk (130) fließen, und

vierte Fördermittel (128) zum Fördern feuerfester Teilchen aus dem zweiten Schöpfwerk (130) zu dem Ladewärmetauscher (122), um dort nach unten hindurchzufließen.

8. Anlage nach einem der Ansprüche 1 bis 5, wobei:

die Speichereinrichtung ein einziges isoliertes Silo mit einem Rumpf (16) aufweist;

die Fließbettwärmetauschereinrichtung einen einzigen Fließbettwärmetauscher (200) aufweist sowohl für das Laden als auch das Entladen des Bettes für feuerfeste Teilchen; und

die Transporteinrichtung einen ersten Archimedesaufzug (210) aufweist, um die feuerfesten Teilchen von unterhalb des Rumpfes (16) nach oberhalb des Fließbettwärmetauschers (200) zu bewegen, sowie einen zweiten Archimedesaufzug (212) aufweist, um die feuerfesten Teilchen von unterhalb des Wärmetauschers (200) nach oberhalb des Rumpfes (16) zu bewegen.

9. Anlage nach Anspruch 8, wobei jeder der Archimedesaufzüge (210, 212) ein Druckmittel aufweist, um einen Druckunterschied zwischen den Aufzugenden aufrechtzuerhalten und die Luftausbreitung durch den Aufzug zu fördern, wodurch die feuerfesten Teilchen, die darin gefördert werden, fluidisiert werden.

**Revendications**

1. Système de stockage et de restitution pour l'accumulation de l'énergie engendrée en excès par rapport à la demande par une centrale à cycle de vapeur pendant les périodes de relâchement de la demande d'électricité par chauffage d'un agent de stockage de chaleur et pour la restitution de l'énergie stockée thermiquement afin de fournir de l'électricité d'appoint pendant les périodes de pointe de la demande d'électricité, le système comprenant:

un moyen d'échange de chaleur à lit mobile (par exemple 14, 19) pour l'échange de chaleur entre le système et la centrale;

des moyens de canalisation pour l'établissement d'une communication entre le cycle de vapeur et le moyen d'échange de chaleur à lit mobile;

des moyens de commande d'écoulement pour l'ouverture et la fermeture sélective des moyens canalisation;

un agent de stockage de chaleur sous la forme d'un lit de particules réfractaires (13) de grosseur voulue pour s'écouler à travers le moyen d'échange de chaleur à lit mobile, le moyen d'échange de chaleur à lit mobile assurant un échange de chaleur indirect entre les particules réfractaires et le fluide de la centrale traversant en service le moyen d'échange de chaleur;

un moyen de stockage (par exemple 16) pour le stockage de l'agent de stockage de chaleur; et

·un moyen de transport (par exemple 20) pour le transport de l'agent de stockage de chaleur entre le moyen de stockage et le moyen d'échange de chaleur à lit mobile,

le système étant caractérisé en ce que les moyens de commande d'écoulement agissent sélectivement pour admettre du fluide à partir de différents points du cycle de vapeur dans le moyen échangeur de chaleur à lit mobile, et en ce que les moyens de canalisation comportent un premier moyen de tuyauterie pour l'établissement d'une communication entre au moins une fraction de vapeur du cycle de vapeur et le moyen échangeur de chaleur à lit mobile (par exemple 14; 19) pour extraire de la vapeur du cycle de vapeur afin d'en communiquer la chaleur aux particules réfractaires (13), un second moyen de tuyauterie (par exemple 107) pour l'établissement d'une communication entre le moyen d'échange de chaleur à lit mobile et une partie d'eau alimentaire du cycle de vapeur en vue du renvoi du fluide extrait du cycle de vapeur à travers le premier moyen de tuyauterie, un troisième moyen de tuyauterie (par exemple 109, section inférieure) pour l'établissement d'une communication de fluide entre un resurchauffeur (68) du cycle de vapeur et le moyen échangeur de chaleur à lit mobile en vue de l'extraction de vapeur resurchauffée hors du cycle de vapeur pour communiquer de sa chaleur aux particules réfractaires, et un quatrième moyen de tuyauterie (par exemple 109, section supérieure) pour l'établissement d'une communication fluide entre le moyen d'échange de chaleur à lit mobile et le cycle de vapeur en un point situé en amont du resurchauffeur (68) pour renvoyer la vapeur extraite du cycle de vapeur à travers le troisième moyen de tuyauterie.

2. Système selon la revendication 1, caractérisé en ce que (figure 1) le premier moyen de tuyauterie comporte un tuyau (105) pour l'établissement d'une communication entre la partie surchauffage du cycle de vapeur et le moyen d'échange de chaleur à lit mobile (14A, 14C, 14D, 14F) pour l'extraction de vapeur surchauffée hors du cycle de vapeur.

3. Système selon la revendication 1 ou 2, caractérisé en ce que les moyens de canalisation comportent un tuyau (111) pour établir une communication de fluide entre une partie eau alimentaire du cycle de vapeur, située au-dessus de moyens réchauffeurs d'eau alimentaire (96, 98, 100), et le moyen d'échange de chaleur (18) en vue de détourner de l'eau alimentaire pour qu'elle soit chauffée par le moyen d'échange de chaleur, et deux autres tuyaux (113) pour renvoyer séparément du fluide au cycle de vapeur au-dessus d'un économiseur (52) et au-dessous de l'économiseur, respectivement.

4. Système selon la revendication 1, caractérisé en ce que (figure 6) le premier moyen de tuyauterie comporte une pluralité de tuyaux d'extraction de vapeur de turbine pour détourner séparément de la vapeur de turbine moyenne et basse pression vers le moyen d'échange de chaleur à lit mobile (19B, 19C, 19D).

5. Système selon la revendication 1 ou 4, caractérisé en ce qu'il comprend un cycle de vapeur en mode de restitution pour la production d'électricité pendant les périodes de pointe de la demande d'électricité, le cycle de vapeur en mode de restitution comportant:

un turbogénérateur de restitution (132, 138);
un condenseur de restitution (135);
une pompe de restitution (136); et
un moyen de canalisation de restitution pour envoyer du fluide traverser le moyen échangeur de chaleur à lit mobile (21), la pompe à turbine de restitution (132), le condenseur de restitution (135) et la pompe de restitution (136) et rejoindre le moyen d'échange de chaleur à lit mobile (21) pour achever le cycle.

6. Système selon l'une quelconque des revendications 1 à 5, caractérisé en ce que:

le moyen de stockage comporte un seul silo isolé (10);

le moyen d'échange de chaleur à lit mobile comporte un échangeur de chaleur de charge (14) placé au sommet du silo (10) assurant en service le chauffage des particules réfractaires (13) au moyen de vapeur détournée du cycle de vapeur, et un échangeur de chaleur de décharge (18) placé à la base du silo (10) et assurant en service le chauffage d'eau alimentaire au moyen des particules réfractaires; et

le moyen de transport comporte un élévateur à godets (20) pour élever les particules réfractaires (13) de dessous l'échangeur de chaleur de décharge (18) jusqu'au-dessus de l'échangeur de chaleur de charge (14), un moyen transporteur inférieur (28) pour transporter les particules réfractaires (13) se déversant de l'échangeur de chaleur de décharge (18) jusqu'à l'élévateur à godets (20) et un moyen transporteur supérieur (26) pour transporter les particules réfractaires (13) de l'élévateur à godets (20) jusqu'à l'échangeur de chaleur de charge (14) afin qu'elles s'écoulent à travers ce dernier.

7. Système selon l'une quelconque des revendications 1 à 5, caractérisé en ce que:

le moyen de stockage comporte un silo chaud (71) et un silo froid (72);

le moyen d'échange de chaleur à lit mobile comporte un échangeur de chaleur de charge (122) placé au sommet du silo chaud (71) et assurant en service le chauffage des particules réfractaires au moyen de vapeur amenée à partir du cycle de vapeur, et un échangeur de chaleur de décharge (124) placé à la base du silo chaud (71) et assurant en service le chauffage d'eau alimentaire au moyen des particules réfractaires; et

le moyen de transport comporte

un premier élévateur à godets (150) pour élever des particules réfractaires de dessous l'échangeur de chaleur de décharge (124) jusqu'au-dessus du silo froid (72)

un second élévateur à godets (130) pour élever les particules réfractaires de dessous le silo froid (72) jusqu'au-dessus de l'échangeur de chaleur de charge (122)

un premier moyen transporteur (126) pour transporter des particules réfractaires se déversant de l'échangeur de chaleur de décharge (124) jusqu'au premier élévateur à godets (150),

un second moyen transporteur (148) pour transporter les particules réfractaires du premier élévateur à godets (150) jusqu'au silo froid (72),

un troisième moyen transporteur (146) pour transporter des particules réfractaires se déversant du silo froid (72) jusqu'au second élévateur à godets (130), et un quatrième moyen transporteur (128) pour transporter les particules réfractaires du second élévateur à godets (130) jusqu'à l'échangeur de chaleur de charge (122) pour qu'elles s'écoulent vers le base à travers ce dernier.

8. Système selon l'une quelconque des revendications 1 à 5, caractérisé en ce que:

le moyen de stockage comporte un seul silo isolé possédant un réservoir (16);

le moyen d'échange de chaleur à lit mobile comporte un un seul échangeur de chaleur à lit mobile (200) tant pour la charge que pour la décharge du lit de particules réfractaires; et

le moyen de transport comporte un premier élévateur à vis d'Archimède (210) pour amener les particules réfractaires de dessous le réservoir (16) jusqu'au-dessous de l'échangeur de chaleur à lit mobile (200) et un second élévateur à vis d'Archimède (212) pour amener les particules réfractaires de dessous l'échangeur de chaleur (200) jusqu'au-dessus du réservoir (16).

9. Système selon la revendication 8, caractérisé en ce que chacun des élévateurs à vis d'Archimède (210, 212) comporte un moyen de pressurisation pour maintenir une différence de pression entre les extrémités de l'élévateur afin de stimuler la diffusion d'air à travers l'élévateur pour fluidiser par là les particules réfractaires en cours de transport dans celui-ci.

FIG. 1

FIG. 8

160

162

164

166

168

170

84

86

FIG. 2

14'B    14'A

14'E

14'F    14'D    14'C

13'

18'A

18'B

500

400

300

200

100

0

TEMP °C

0    20    40    60    80    100

PERCENT HEAT TRANSFER

## FIG. 3

FIG. 5

FIG. 4

# FIG.6

## FIG. 7

# FIG. 9

FIG.10